# EUROPEAN PATENT SPECIFICATION

(11) **EP 0 635 777 B1**
(45) Date of publication and mention of the grant of the patent: **09.06.1999**
(21) Application number: 94305380.1
(22) Date of filing: 21.07.1994
(51) Int. Cl.: G06F 1/16

(54) **Docking device for portable computers**
Stauvorrichtung für tragbaren Rechner
Dispositif pour l'arrimage d'un ordinateur portatif

(30) Priority: 22.07.1993 JP 18159393
(43) Date of publication of application: 25.01.1995
(73) Proprietor: International Business Machines Corporation, Armonk, N.Y. 10504 (US)
(72) Inventor: Yamazaki, Kazuhiko, Hiratsuka-shi, Kanagawa-ken (JP); Usui, Hideyuki, Chigasaki-shi, Kanagawa-ken (JP); Maeda, Kazuhiko, Sagamihara-shi, Kanagawa-ken (JP)
(74) Representative: Burt, Roger James, Dr.

(56) References cited:
- EP-A- 0 481 461
- EP-A- 0 510 814
- DE-U- 9 212 801

## Description

The present invention relates to a docking device for a portable computer and, more specifically, to that of a kind on which a portable computer is placed and fixed, and which provides electrical connections to the portable computer so as to extend its various functions.

In conventional personal computers capable of accommodating stereo sound, and in docking devices for computers, speakers are disposed in a rear portion of a main body facing the back.

There are conventional desktop-use docking devices (also called "docking stations") for computers capable of incorporating a full-size (larger than the A4 size) AT bus. (The AT bus is an extension bus, and the full-size AT bus card is a circuit board on which the full-size AT bus is formed.) Although there exist docking devices for computers which have built-in speakers in order to serve for multimedia, most of them are for desktop use and therefore not portable. Furthermore, there exist docking devices for portable computers which have a built-in slot for an AT bus with importance attached to portability see, for example, document EP-A-0 481 461. Most of them can accommodate an AT bus card that is smaller than two-thirds of a full-size AT bus card, but at present there is no docking device capable of accommodating a full-size AT bus card itself. Incidentally, it may be conceivable, as disclosed in Published Unexamined Patent Application No. 4-617, to form an opening in a side wall of a main body and accommodate a full-size AT bus card through the opening with part projecting outward. In this case, however, a new cover dedicated to this purpose needs to be provided.

Also known are docking devices for computers which have a bay structure (with an accommodation space for a fixed or detachable memory, etc.) for upgrading available functions. These are stationary docking devices having only an SCSI (small computer system interface) in the bay area.

However, the above conventional docking devices for a computer in which speakers are disposed in the rear portion of the main body facing the back are associated with a problem of an inferior tone quality due to the backward orientation of the speakers, to say nothing of stereo effects. The desktop docking devices for computers capable of incorporating a full-size AT bus card are inconvenient because they are not portable. The docking devices for a portable computer having the built-in AT bus slot are inferior in function because they cannot accommodate a full-size AT bus card. Furthermore, the conventional docking devices for a computer having a bay structure are also inconvenient because they are stationary, i.e., not portable.

The present invention has been made in view of the above problems, and seeks to provide a dockinq device for a portable computer which can particularly improve stereo effects and tone quality, and which allows a portable computer to have the same functions as a desktop personal computer.

Accordingly, viewed from one aspect the present invention provides a docking device for a portable computer, the docking device providing mechanical and electrical connections to a portable computer when it is placed in an operative position on the docking device, to thereby enable the portable computer to perform more functions, the docking device comprising: a hollow main body having a support portion on which a portable computer may be placed and fixed, and projecting portions projecting from respective sides along the width of the support portion; and a speaker located on each projecting portion of the main body.

Since the stereo speakers are disposed at the respective end portions along the width of the support portion upon which the portable computer is placed and fixed, it is possible to attach the speakers, for instance, to the top face of the respective end portions along the width of the support portion so as to face upward, to the side faces thereof so as to face outward, or to the front face thereof so as to face the front. As a result, both the stereo effect and tone quality are improved from the conventional case where the speakers are disposed in the main body facing the back.

Since the speakers are built in the respective projecting portions projecting from the respective sides along the width of the support portion of the main body, it is possible to attach the speakers, for instance, to the top faces of the projecting portions so as to face upward, to the side faces thereof so as to face outward, or to the front face thereof. Therefore, the speakers can be incorporated without reducing space for accommodating other devices, etc. In this case, a stereo effect can be obtained by using stereo speakers.

Furthermore, since the internal space of the main body is widened along the width by the spaces of the projecting portions, it becomes possible to accommodate a full-size AT bus card which cannot be accommodated by conventional portable docking devices. As a result, various devices such as a device having an SCSI and a device using an IDE (integrated device electronics: a kind of a disk drive interface) as an interface, communication devices, etc., can be connected to a full-size AT bus card, so that a portable computer is allowed to have the same functions as a desktop personal computer.

Since the small computer system interface (SCSI) and an interface of a kind other than the SCSI are incorporated in the accommodation space provided in the main body, an HDD (hard disk drive), MO (magneto-optical disk), CD-ROM, or other device can be accommodated in the accommodation space by connecting one of these devices to the SCSI. If, for instance, an IDE having an AT bus is used as the different kind of interface, a 2.5-inch HDD, etc., can be accommodated in the accommodation space by connecting it to the IDE. Therefore, where the devices as mentioned above as well as the full-size AT bus card are used, the functions of a portable computer can be further upgraded.

A full-size card (for instance, a full-size AT bus card) can be accommodated in the main body as it is without the need of forming an opening in the side wall of the main body and newly providing a dedicated cover as in the case of PUPA No. 4-617 mentioned above.

In order that the invention may be fully understood preferred embodiments thereof will now be described, by way of example only, with reference to the accompanying drawings in which:
Figure 1 is a perspective view showing an appearance of a docking device according to an embodiment of the invention when viewed from an oblique top-front point;
Figure 2 is a perspective view of the docking device of Figure 1 when viewed from an oblique top-rear point;
Figure 3 is a partially omitted, broken perspective view of the docking device of Figure 1;
Figure 4 is a perspective view of a main cabinet of Figure 3 incorporating stereo speakers when viewed obliquely from below;
Figure 5 shows examples of optional devices capable of being connected to a main PCB of Figure 3; and
Figure 6 shows examples of methods for attaching stereo speakers to a main body of the docking device to improve stereo effect and tone quality.

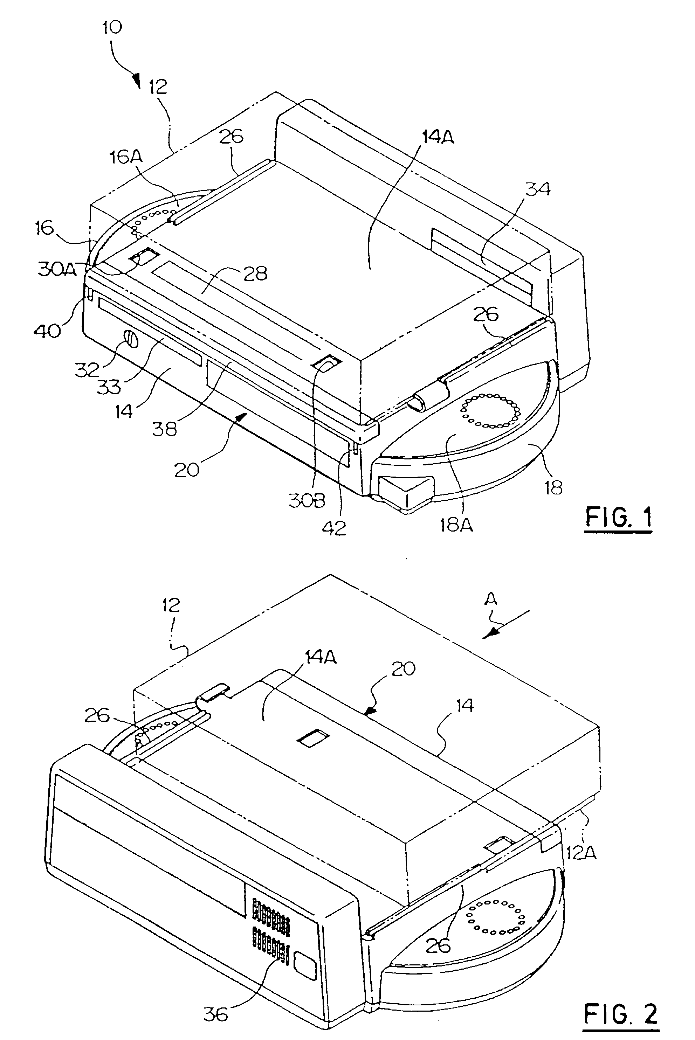

Figure 1 shows a docking device for a portable computer (hereinafter abbreviated as "docking device") according to an embodiment of the invention.

A docking device 10 has a hollow main body 20 that includes a support portion 14 upon which a notebook-type personal computer 12, such as a portable computer, is to be placed, and projecting portions 16 and 18 projecting sideways from the respective ends in the width direction of the support portion 14.

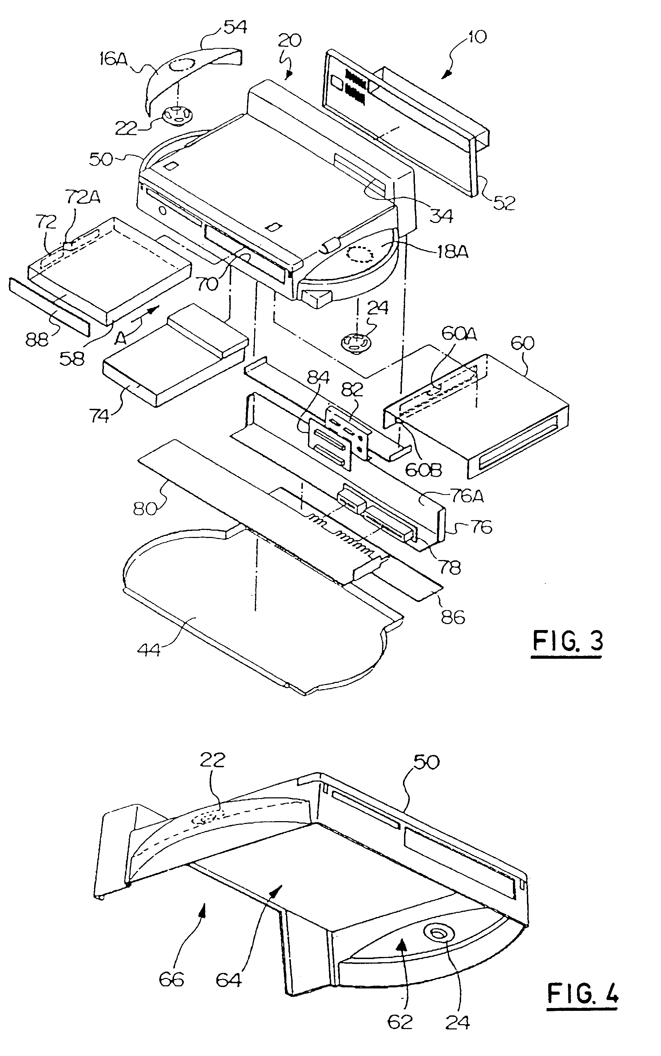

The projecting portions 16 and 18 have bottom faces that are parts of a bottom cover 44 (see Figure 3) shared with the support portion 14, and ceiling faces 16A and 18A that are one-step lower than a ceiling face 14A of the support portion 14. Stereo speakers 22 and 24 (see Figure 3) are attached, facing upward, to the ceiling faces 16A and 18A at their approximate centers.

Two strip protrusions 26 are formed on the ceiling face 14A of the support portion 14 at each of its two ends along the width so as to be spaced from each other at a certain interval and to extend in the front-rear direction of the main body 20. When the notebook-type personal computer 12 is placed upon the ceiling face 14A of the support portion 14, a protrusion 12A (see Figure 2) projecting downward from the bottom face of the personal computer 12 is fitted into a U-shaped groove formed by the strip protrusions 26 at one end (the left end in Figure 1) along the width and, similarly, another protrusion projecting downward from the bottom face of the personal computer 12 is fitted into a U-shaped groove formed by the strip protrusions 26 at the other end along the width.

A long and narrow, rectangular label 28 is stuck to the ceiling face 14A of the support portion 14 at a front portion so as to extend along the width, and rectangular openings 30A and 30B are formed on the respective sides along the width of the label 28. The docking device 10 is so constructed that hook-shaped engaging segments (not shown) can project and retreat through the respective openings 30A and 30B by rotating a key inserted into a key hole 32 provided in the front face of the main body 20. That is, when the notebook-type personal computer 12 is put in place (see Figure 1) and a key is inserted into the key hole 32 and rotated in the predetermined direction, the engaging segments project out of the main body 20 and engage with an engaging means (not shown) provided on the bottom face of the notebook-type personal computer 12. Thus, the notebook-type personal computer 12 is joined (i.e., mechanically connected) to the docking device 10. Furthermore, a handle 33 for ejecting the notebook-type personal computer 12 engaged with the docking device 10 is provided in the vicinity of the keyhole 32.

To prevent a problem of failure to remove the key, it is desired that such a structure be provided which disables key removal except when it is necessary to do so.

As shown in Figures 1 and 2, the rear end portion of the support portion 14 protrudes upward from the remaining portion. A lid 34, which can be opened and closed, is provided in the front face of the above projecting portion on one side (the right side in Figure 1). A connector for electrically connecting the notebook-type personal computer 12 to the docking device 10 is incorporated inside the lid 34.

As shown in Figure 2, a number of vertically long, rectangular slits 36 are opened in the back face of the main body 20, and a cooling fan (not shown) is incorporated at the inner portion of the main body 20 corresponding to the slits 36.

Furthermore, a handle 38 slidable in the front-rear direction of the main body 20 and used as a grip in carrying the docking device 10 is provided at the front side of the support portion 14. The handle 38 is provided so that its two longitudinal end portions are arranged with the two side ends of the support portion 14 facing the front and rear, and is fixed to the front ends of the support arms 40, 42 which are slidable along the side faces of the support portion 14. In addition to serving as the grip when the dockinq device 10 is carried, the handle 38 serves as an arm rest when the key board of the personal computer 12 is operated.

Next, the internal structure etc. of the docking device 10 is described with reference to the broken perspective view of Figure 3.

The main body 20 consists of a main cabinet 50, a rear cover 52, a lid 54, and a bottom cover 44.

Among those components, the main cabinet 50 constitutes, as a single member, the front wall and the ceiling wall of the support portion 14, the ceiling wall and the side wall of the projecting portion 18, and the side wall of the projecting portion 16. Being engaged with the bottom of the main cabinet 50, the bottom cover 44 constitutes the bottom wall of the main body 20. Being engaged with the top left side (in Figure 3) of the main cabinet 50, the lid 54 constitutes the ceiling wall and part of the peripheral wall of the projecting portion 16. The respective components are fixed by proper fixing means, such as screws.

A bay area 62 (see Figure 4), as an accommodation space for such a device as a CD-ROM 58, is formed inside of the main cabinet 50 so as to occupy approximately the right half of its space (in Figure 3). As shown in Figure 3, a main chassis 60 is accommodated in the bay area 62 and fixed to the inner surface of the main cabinet 50. The CD-ROM 58 is inserted into the main chassis 60 through a front opening 70 in the direction indicated by arrow A in Figure 3, and latched by the fitting of a protrusion 72A of a metal attachment 72 attached to the side face of the CD-ROM 58 into a hole 60A formed in the side face of the main chassis 60. A guide 60B for the insertion of the CD-ROM 58 is formed on the inner side surface of the main chassis 60.

On the other hand, as shown in Figure 4, an area 64 for accommodating a power supply is formed inside the main cabinet 50 so as to occupy approximately the left half space (in Figure 3). A power supply 74 is accommodated in the power supply accommodation area 64 adjacent to the CD-ROM 58.

A main PCB (circuit board) 76 having an L-shaped cross-section is accommodated in the space of the main cabinet 50 located in the rear of and below the portion where the CD-ROM 58 and the power supply 74 are accommodated. Various kinds of buses formed in the main PCB 76 are not shown in Figure 3. Various optional devices may be connected to the main PCB 76 as described later.

A connector 78 for connection to an AT bus card is attached to a lower portion of an erected portion 76A of the main PCB 76. A full-size AT bus card 80 is connected to the docking device 10 through the connector 78. After connection to the docking device 10, the full-size AT bus card 80 is located below the above-described CD-ROM 58 and the power supply 74 with its one end portion in the longitudinal direction extending to under the speaker 22.

As shown in Figure 4, an I/O area 66 is formed in an internal space at a rear end portion of the main cabinet 50. An I/O circuit board 84 for I/O interface fixed to a bracket 82 having a square-bracket-shaped cross-section is accommodated in the I/O area 66 so as to be opposed to the lid 34. The I/O circuit board 84 constitutes various kinds of interfaces such as a serial interface, parallel interface, interfaces for a FDD, KBD and mouse, and SCSI when the notebook-type personal computer 12 is docked to the docking device 10 for use as a desktop computer.

The main PCB 76 is so constructed that a multilayer AD/VGA circuit board 86 can be attached to its bottom face.

In Figure 3, symbol 88 denotes a front cover which is attached to the front opening 70 for the insertion of the CD-ROM 58 so as to be able to open and close. Various cables etc. are not shown in Figure 3 in order to keep the figure from being unduly complex.

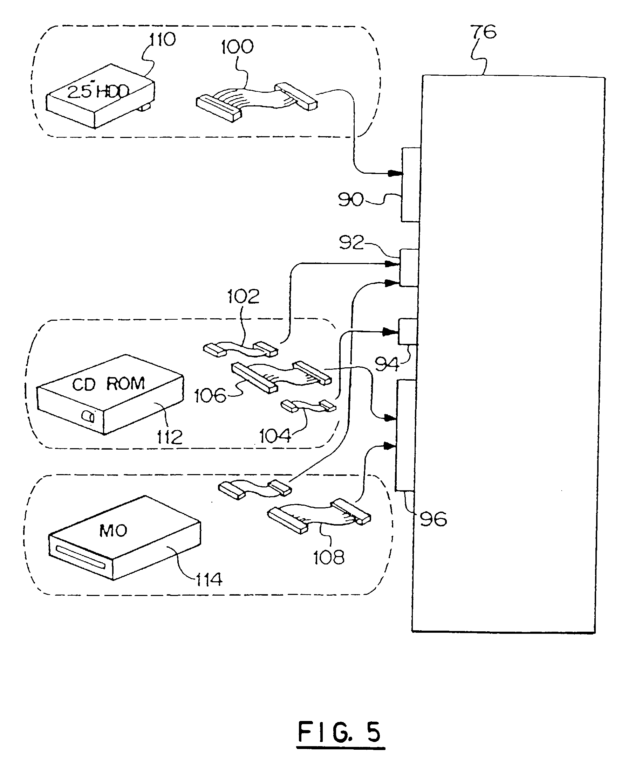

Next, examples of optional devices to be connected to the main PCB 76 are described with reference to Figure 5.

Figure 5 schematically shows the main PCB 76 and examples of optional devices capable of being connected to the main PCB 76.

In Figure 5, a 50-pin AT bus connector 90, a 4-pin power connector 92, a 4-pin audio connector 94, and a 50-pin SCSI bus connector 96 are attached to the main PCB 76.

A 2.5-inch HDD (hard disk drive) 110 is connected to the AT bus connector 90 via a cable connector 100 (50 pins), and a CD-ROM 112 is connected to the power connector 92 and audio connector 94 via cable connectors (4 pins) 102 and 104. The CD-ROM 112 is further connected to the SCSI bus connector 96 via a cable connector (34 pins) 106. A MO 114 is also connected to the SCSI bus connector 96 via a cable connector 108 (34 pins). Instead of the MO 114, another CD-ROM may be connected to the SCSI bus connector 96.

Although it is apparent that optional devices to be connected to the main PCB 76 are not limited to the above ones, it is desired that optional devices have a height no greater than 1 inch so as not to increase the size of the docking device 10 (for instance, to keep the size within 410 mm × 250 mm × 103 mm). To facilitate carrying, it is desired that after incorporation of the optional devices the weight of the docking device 10 be lighter than about 2.8 kg.

Next, a description is made of how to attach the notebook-type personal computer 12 to the docking device 10 of the embodiment as constructed in the above manner.

As shown in Figure 2, to attach the notebook-type personal computer 12 to the docking device 10, the personal computer 12 is placed on the docking device 10 so that each of the protrusions 12A formed on the bottom face of the personal computer 12 is fitted into the U-shaped groove of the strip protrusions 26 formed on the ceiling face 14A of the support portion 14 of the main body 20 at the respective ends along the width, and the personal computer 12 continues to be slid on the ceiling face 14A while being pushed in the direction indicated by arrow A in Figure 2 until the personal computer 12 is completely placed upon the support portion 14 (see Figure 1). During the movement of the notebook-type personal computer 12, a connector (not shown) provided on the back face of the personal computer 12 pushes the lid 34 so as to open it and then connects to the connector incorporated in the main body 20. Thus, the notebook-type personal computer 12 is electrically connected to the docking device 10.

Then, when an operator inserts the key into the key hole 32 and rotates the key in the predetermined direction, the hook-shaped engaging segments (not shown) are projected outside of the main body 20 through the openings 30A and 30B in link motion with the rotation of the key and engaged with the engaging means (not shown) provided on the bottom face of the notebook-type personal computer 12. Thus, the notebook-type personal computer 12 is mechanically connected to the docking device 10 and fixed to it. When in this state the operator removes the key from the keyhole 32, a latch mechanism including the engaging segments is locked to complete the attachment of the notebook-type personal computer 12. The notebook-type personal computer 12 can be ejected from the docking device 10 by releasing the lock and manipulating the handle 33.

According to the embodiment described above, since the stereo speakers 22 and 24 are attached to the respective ceiling faces 16A and 18A of the projecting portions 16 and 18 projecting sideways from the respective ends along the width of the support portion 14 of the main body 20, both stereo effect and tone quality are improved.

Since the internal space of the main body 20 is extended along the width only in the projecting portions 16 and 18, the full-size AT bus card 80, which cannot be accommodated in conventional portable docking devices, can be accommodated. Since various devices such as a device having an SCSI and a device using an IDE as an interface can be connected to the full-size AT bus card 80, the notebook-type personal computer 12 is allowed to have the same functions as a desktop personal computer.

Since the weight of the docking device 10 is preferably kept lighter than 2.8 kg, it can be carried by hand by gripping the handle 38 even in a state where it is jointed to the notebook-type personal computer 12.

Furthermore, since the SCSI and the AT bus interface are incorporated in the bay area 62 provided in the space above the full-size AT bus card 80, SCSI type devices having a height no greater than 1 inch, such as an HDD, MO, or CD-ROM (including an audio interface) can be connected to the SCSI and accommodated in the bay area 62. Where an IDE having an AT bus is used as the AT bus interface, a 2.5-inch HDD, etc. can be connected to it and accommodated in the bay area 62. As a result, it becomes possible to allow the notebook-type personal computer 12 to have very high level of function.

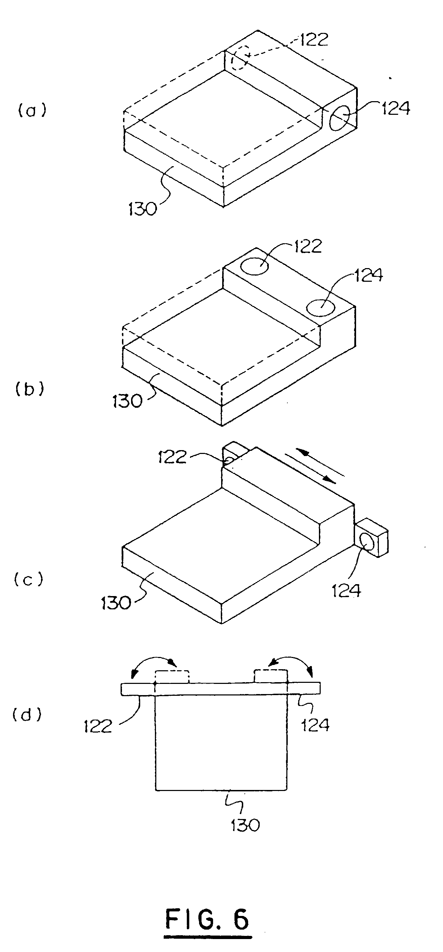

Figures 6(a)-6(d) show examples of methods for attaching the speakers to the main body of the docking device to improve the stereo effect and tone quality. In Figure 6(a), stereo speakers 122 and 124 are attached to the side faces of a main body 130 so as to face outward. In Figure 6(b), the stereo speakers 122 and 124 are attached to the top face of a projecting portion located at a rear end portion of the main body 130 so as to face upward. In Figure 6(c), the stereo speakers 122 and 124 are attached to the back face of the main body 130 so as to be slidable along the width. In Figure 6(d), the stereo speakers 122 and 124 are attached to the main body 130 so as to be rotatable about its rear edges. In particular, the examples of Figures 6(c) and 6(d) will highly improve the stereo effect.

As described above, the docking device for a portable computer according to the invention can provide the advantages, which cannot be attained conventionally, of improving a stereo effect and a tone quality and allowing a portable computer to have the same functions as a desktop personal computer.

## Claims

1. A docking device for a portable computer, the docking device providing mechanical and electrical connections to a portable computer when it is placed in an operative position on the docking device, to thereby enable the portable computer to perform more functions, the docking device characterised by comprising:
a hollow main body having a support portion on which a portable computer may be placed and fixed, and projecting portions projecting from respective sides along the width of the support portion; and
a speaker located on each projecting portion of the main body.

2. A docking device for a portable computer as claimed in claim 1, wherein a small computer system interface and an interface of a kind different than the small computer system interface are incorporated in an accommodation space provided in said main body.

3. A docking device for a portable computer as claimed in any of claims 1 or 2, wherein the width of the main body, including said projecting portions, is so set as to enable accommodation of a full-size card.

4. A computer system including a portable computer and a docking device as claimed in any of claims 1 to 3.

## Patentansprüche

1. Andock-Vorrichtung für tragbare Computer, wobei die Andock-Vorrichtung mechanische und elektrische Verbindungen zu einem tragbaren Computer bereitstellt, wenn er in eine Betriebsposition auf der Andock-Vorrichtung angeordnet wird, um dadurch dem tragbaren Computer zu ermöglichen, mehr Funktionen durchzuführen, wobei die Andock-Vorrichtung dadurch gekennzeichnet ist, daß sie umfaßt:
einen hohlen Hauptkörper, der einen Trägerabschnitt, auf dem ein tragbarer Computer angeordnet und befestigt werden kann und vorspringende Abschnitte, die von den jeweiligen Seiten entlang der Breite des Trägerabschnitts hervorspringen aufweist, und
einen Lautsprecher, der auf jedem hervorspringenden Abschnitt des Hauptkörpers angeordnet ist.

2. Andock-Vorrichtung für einen tragbaren Computer nach Anspruch 1, wobei eine Schnittstelle für ein kleines Computersystem und eine Schnittstelle eines Typs, der sich von der Schnittstelle für ein kleines Computersystem unterscheidet, in einen Unterbringungsraum eingebaut sind, der in dem Hauptkörper bereitgestellt ist.

3. Andock-Vorrichtung für einen tragbaren Computer nach irgendeinem der Ansprüche 1 oder 2, wobei die Breite des Hauptkörpers einschließlich der vorspringenden Abschnitte so festgelegt wird, daß eine Unterbringung einer Karte im Ganzformat ermöglicht wird.

4. Computersystem, das einen tragbaren Computer und eine Andock-Vorrichtung, die in irgendeinem der Ansprüche 1 bis 3 beansprucht wird, einschließt.

## Revendications

1. Un dispositif d'arrimage pour un ordinateur portatif, le dispositif d'arrimage fournissant des liaisons mécaniques électriques à un ordinateur portatif lorsqu'il est placé en position opérationnelle sur le dispositif d'arrimage, pour permettre de cette manière à l'ordinateur portatif d'assurer plus de fonctions, la partie dispositif d'arrimage comprenant :
un corps principal creux ayant un support sur lequel un ordinateur portatif peut être placé et fixé, et des parties en saillie, se projetant depuis des côtés respectifs dans la largeur de la partie support; et
un haut-parleur placé sur chaque partie en saillie du corps principal.

2. Un dispositif d'arrimage pour un ordinateur portatif selon la revendication 1, dans lequel une interface système pour petit ordinateur et une interface d'un type différent de l'interface système pour petit ordinateur sont incorporées dans un espace de logement prévu dans ledit corps principal.

3. Un dispositif d'arrimage pour un ordinateur portatif selon l'une quelconque des revendications 1 ou 2, dans lequel la largeur du corps principal, comprenant lesdites parties en saillie, est fixée de manière à permettre le logement d'une carte de pleine taille.

4. Un système d'ordinateur comprenant un ordinateur portatif et un dispositif d'arrimage selon l'une quelconque des revendications 1 à 3.
